# EUROPÄISCHE PATENTSCHRIFT

(11) **EP 0 346 863 B1**
(45) Veröffentlichungstag und Bekanntmachung des Hinweises auf die Patenterteilung: **29.12.1993**
(21) Anmeldenummer: 89110785.6
(22) Anmeldetag: 14.06.1989
(51) Int. Cl.: C08K 5/00, C08F 291/00

(54) **Zur Vernetzung von Polymeren geeignete Mischung und Verfahren zum Vernetzen von Polymeren unter Verlängerung der Scorchzeit**
Mixture suited for the cross-linking of polymers, and process for the cross-linking of polymers with extended scorch time
Mélange adapté à la réticulation de polymères et procédé de réticulation de polymères avec prolongement du temps d'amorçage de réticulation

(30) Priorität: 14.06.1988 DE 3820252
(43) Veröffentlichungstag der Anmeldung: 20.12.1989
(73) Patentinhaber: Elf Atochem Deutschland GmbH, 40474 Düsseldorf (DE)
(72) Erfinder: Groepper, Jürgen, D-8870 Günzburg (DE); Hofmann, Harald, D-7912 Weissenhorn (DE)
(74) Vertreter: Morf, Jan Stefan, Dr. Dipl.-Chem.

(56) Entgegenhaltungen:
- FR-A- 1 419 940
- FR-A- 2 292 738
- Römpps Chemie Lexikon 8. Auflage S. 1788

## Beschreibung

Die Erfindung betrifft eine zur Vernetzung von Polymeren geeignete Mischung und ein Verfahren zum Vernetzen von Polymeren unter Verlängerung der Scorchzeit.

Zur Vernetzung von Polyolefinen und Elastomeren werden organische Peroxide eingesetzt, wenn hohe mechanische und physikalische Anforderungen an die Endprodukte gestellt werden, wie bessere Hitzealterung und niedrigerer Druckverformungsrest (bleibende Verformung) im Vergleich zu schwefelvernetzten Elastomeren.

Vernetzungszeit und Zeit von der Zugabe des organischen Peroxids zum Polymeren bis zum Vernetzungsbeginn (Scorchzeit) sind von der thermischen Zerfallsgeschwindigkeit (Halbwertszeit) der als Vernetzungsmittel verwendeten Peroxide abhängig. Häufig ist es erwünscht, die Scorchzeit (die als Verarbeitungszeit aufzufassen ist) zu verlängern, ohne Verlängerung der Vernetzungszeit - wie es bei der Schwefelvernetzung durch Verwendung von Inhibitor- und Beschleunigersystem im Kautschuk möglich ist - und ohne Verschlechterung der Vernetzung (Resultante aus Vernetzungsgrad und Vernetzungsdichte).

Es gibt zwar bei der peroxidischen Vernetzung Möglichkeiten, die Scorchzeit durch den Einsatz von höher anspringenden Vernetzungsinitiatoren, d.h. solchen mit längerer Halbwertszeit, zu verlängern, dies ist jedoch mit einer längeren Vernetzungszeit und damit geringerer Produktivität verbunden.

Auch die Erniedrigung der Prozesstemperatur ermöglicht die gewünschte Verlängerung der Scorchzeit, führt jedoch wiederum zu einem geringeren Produktausstoss.

Die Verlängerung der Scorchzeit lässt sich auch durch den Einsatz gewisser Hilfsstoffe in der peroxidischen Vernetzung von Polymeren realisieren:
- Die deutschen Auslegeschriften 2 553 145 und 2 553 094 beschreiben die Verwendung der Hydroperoxide Cumolhydroperoxid und t-Butyl-hydroperoxid als Scorchzeitverlängerer in der peroxidischen Vernetzung von Ethylen-homo- und -copolymeren. Mit der erwünschten Verlängerung der Scorchzeit geht jedoch eine unerwünschte Verschlechterung der Vernetzung einher.
- Die britische Patentschrift GB-A-1 386 616 offenbart die Verwendung von N-Nitroso-diarylaminen (z.B. N-Nitroso-diphenylamin) oder N,N′-Dinitroso-N,N′-diaryl-p-phenylendiaminen (z.B. N,N′-Dinitroso-N,N′-diphenyl-p-phenylendiamin) als Verzögerer (= Scorchinhibitoren) in der peroxidischen Vernetzung von Kautschuk in Kombination mit methacrylischen oder acrylischen Vernetzungsverstärkern (z.B. Trimethylolpropan-trimethacrylat). Diese Nitrosoverbindungen stehen - wie alle N-Nitroso-Verbindungen - im Verdacht carcinogener Wirkung beim Menschen.
- Y.W. Chow und G. Y. Knight, Rubbercon 77, Int. Rubber Conf. 1977, 2, Beitrag Nr. 24, beschreiben die Vernetzung von Kautschuk mittels Dicumylperoxid in Gegenwart von m-Phenylenbismaleinimid als Vernetzungsverstärker und einem Radikalfänger, wie N-Nitrosodiphenylamin, als Scorchverzögerer. Hierbei tritt neben der erwünschten Verlängerung der Scorchzeit aber die unerwünschte Verzögerung der Vernetzungszeit auf.
- In der US-Patentschrift US-A-3 335 124 wird die peroxidische Vernetzung von Polyethylen beschrieben unter Verwendung folgender Substanzklassen als Verzögerer zur Verlängerung der Scorchzeit: a) Antioxydantien (u.a. auch 2,5-Di-t-butyl-hydrochinon und 2,5-Di-t-amyl-hydrochinon) oder b) Verbindungen, die allgemein als Beschleuniger für die Schwefelvernetzung von Kautschuk bekannt sind (z.B. 2-Merkaptobenzothiazol, Tetramethylthiuram-disulfid) oder c) Verbindungen, die sowohl Antioxydantsfunktion als auch Beschleunigerfunktion in der Schwefelvernetzung von Kautschuk haben (z.B. Amin/Aldehyd-Addukte wie Hexamethylentetramin oder Butyraldehyd-Monobutylamin-Kondensationsprodukt). Vernetzungsverstärker kommen nicht zur Anwendung.
- Die japanische Kokai Tokkyo Koho 59 215 347 (84 215 347) beschreibt ein Verfahren zur Vernetzung von Acrylkautschuk mittels Peroxid (Dicumylperoxid) als Vernetzungsmittel in Gegenwart eines Vernetzungsverstärkers (z.B. Triallylisocyanurat) und/oder eines Thioharnstoffderivats (z.B. Trimethylthioharnstoff) sowie Phenothiazin als Scorchzeitverlängerer.
- Nach der britischen Patentschrift GB-A-1 535 038 werden Ethylenhomo- oder -copolymere mittels Peroxid (z.B. Dicumylperoxid) als Vernetzungsmittel in Gegenwart eines Vernetzungsverstärkers mit wenigstens 3 Allylgruppen (z.B. Triallylcyanurat, Triallylphosphat, Tetraallyloxyethan) und einem organischen Hydroperoxid (z.B. t-Butyl-hydroperoxid, Cumol-hydroperoxid) als Scorchzeitverlängerer vernetzt.

Aufgabe der Erfindung ist die Verlängerung der Scorchzeit bei der Vernetzung von Polymeren mit organischen Peroxiden unter Vermeidung einer Verlängerung der Vernetzungszeit und einer Verschlechterung der Vernetzung, wobei der Scorchzeitverlängerer nicht flüchtig sein soll (wie Hydroperoxid), nicht toxisch sein soll (wie N-Nitrosoverbindungen) und keinen Schwefel enthalten soll (wie Phenothiazin), um dem vernetzten Endprodukt keinen unangenehmen Geruch zu verleihen.

Diese Aufgabe wird gelöst durch Verwendung einer Kombination aus organischem Peroxid, einem Hydrochinonderivat und einem Vernetzungsverstärker.

Gegenstand der Erfindung ist demnach eine Mischung, enthaltend
(a) mindestens ein organisches, zur Vernetzung von Polymeren geeignetes Peroxid,
(b) mindestens ein Hydrochinonderivat der allgemeinen Formeln I und/oder II und/oder III 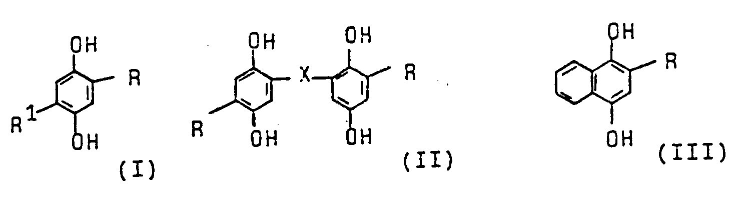 in denen R und R¹, die gleich oder verschieden sein können, H, t-Alkyl, t-Cycloalkyl oder Aryl-t-alkyl und X = C₁₋₁₈-Alkylen, das durch C₁₋₁₀-Alkyl und/oder C₁₋₁₀-Alkoxy und/oder Phenyl substituiert sein kann, C₂₋₁₈-Alkenylen oder C₂₋₁₈-Alkpolyenylen, die durch C₁₋₁₀-Alkyl substituiert sein können, oder -(CR²R³)ₙ-Ar-(CR²R³)ₘ-, worin R² und R³ gleich oder verschieden Wasserstoff oder C₁₋₁₀-Alkyl, Ar Phenyl oder Naphthyl, n und m 0 bis 18 und n + m ≦ 18 sind, bedeuten, wobei X bevorzugt -CH₂CH=CHCH₂-, -CH₂-, CH₃-CH〈, (CH₃)₂C〈 oder -C(CH₃)₂-C₆H₄-C(CH₃)₂- ist, wobei die Hydrochinone der Formel III am nicht durch die Hydroxygruppen und R substituierten Benzolring des Naphthalin-Gerüstes durch C₁₋₁₀-Alkyl substituiert sein können und
(c) mindestens einen Vernetzungsverstärker, der eine Verbindung mit mindestens zwei Polymerisierbaren C-C Doppelbindungen ist,
sowie ein Verfahren zum Vernetzen von Polymeren unter Verlängerung der Scorchzeit, insbesondere von Polyolefinen und Elastomeren, wobei man dem zu vernetzenden Polymeren
(a) mindestens ein organisches, zur Vernetzung von Polymeren geeignetes Peroxid,
(b) mindestens ein Hydrochinonderivat der allgemeinen Formeln I und/oder II und/oder III 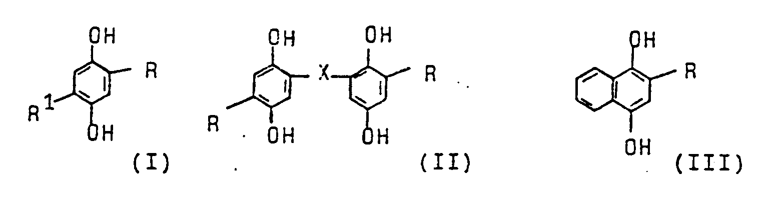 in denen R und R¹, die gleich oder verschieden sein können, H, t-Alkyl, t-Cycloalkyl oder Aryl-t-alkyl und X = C₁₋₁₈-Alkylen, das durch C₁₋₁₀-Alkyl und/oder C₁₋₁₀-Alkoxy und/oder Phenyl substituiert sein kann, C₂₋₁₈-Alkenylen oder C₂₋₁₈-Alkpolyenylen, die durch C₁₋₁₀-Alkyl substituiert sein können, oder -(CR²R³)ₙ-Ar-(CR²R³)ₘ-, worin R² und R³ gleich oder verschieden Wasserstoff oder C₁₋₁₀-Alkyl, Ar Phenyl oder Naphthyl, n und m 0 bis 18 und n + m ≦ 18 sind, bedeuten, wobei X bevorzugt -CH₂CH=CHCH₂-, -CH₂-, CH₃-CH〈, (CH₃)₂C〈 oder -C(CH₃)₂-C₆H₄-C(CH₃)₂- ist, wobei die Hydrochinone der Formel III am nicht durch die Hydroxygruppen und R substituierten Benzolring des Naphthalin-Gerüstes durch C₁₋₁₀-Alkyl substituiert sein können und
(c) mindestens einen Vernetzungsverstärker der eine Verbindung mit mindestens zwei Polymerisierbaren C-C Doppelbindungen ist,
getrennt, gleichzeitig oder nacheinander oder als Mischung miteinander hinzufügt. Im Falle der getrennten Zugabe der Komponenten wird das Peroxid in der Regel zum Schluss zugegeben.

Die erfindungsgemäss verwendete Kombination vernetzt ein Polymeres in der gleichen Zeit und mit gleich guter Vernetzung wie das Peroxid alleine, gibt aber die gewünschte längere Scorchzeit.

Die erfindungsgemässen Mischungen weisen eine unerwartet gute Lagerstabilität auf, trotz der Unverträglichkeit von Peroxid mit Hydrochinonderivaten und von Peroxid mit Vernetzungsverstärkern beim Lagern.

Die eingesetzten Polymere sind vorzugsweise Polyolefine und Elastomere und zwar solche Homo- und Copolymere, die durch Peroxide vernetzt werden können und die in "Rubber World", Oktober 1983, Seiten 26 bis 32, im Aufsatz "Vernetzung von Elastomeren" und in "Rubber and Plastics News", September 1980, Seiten 46 bis 50, im Aufsatz "Organische Peroxide für die Vernetzung von Kautschuk" beschrieben sind. Dazu gehören unter anderem folgende Polymere: Polyethylen niedriger Dichte (LDPE), Polyethylen mittlerer Dichte (MDPE), Polyethylen hoher Dichte (HDPE), lineares Polyethylen niederer Dichte (LLDPE), lineares Polyethylen mittlerer Dichte (LMDPE), Ethylen-Propylen-Dien-Terpolymer (EPDM), Ethylen-Propylen-Copolymer, 1,4-Polybutadien, Butadien-Styrol-Kautschuk, Butadien-Styrol-Acrylnitril-Kautschuk, chloriertes Polyethylen, chlorsulfoniertes Polyethylen (= Hypalon), Silikonkautschuk, Nitrilkautschuk, Butylkautschuk, Fluorkautschuk und Ethylen-Vinylacetat-Copolymer (EVA). Es können auch Gemische dieser Polymere verwendet werden.

Organische Peroxide im Sinne vorliegender Erfindung sind solche Peroxide, die bei der thermischen Zersetzung vernetzungsaktive freie Radikale bilden. Bevorzugt sind Dialkylperoxide und Ketalperoxide, wie sie in der "Encyclopedia of Chemical Technology", 3rd Edition, Vol. 17, Seiten 27 bis 90 beschrieben sind.

In die Gruppe der Dialkylperoxide als bevorzugte Initiatoren fallen beispielsweise: Dicumylperoxid, Di-t-butylperoxid, t-Butyl-cumylperoxid, 2,5-Dimethyl-2,5-bis(t-butylperoxy)-hexan, 2,5-Dimethyl-2,5-bis(t-butylperoxy)-hexin-(3), alpha,alpha′-Bis(t-butylperoxy)-diisopropylbenzol, Di-t-amyl-peroxid, 1,3,5-Tris(2-t-butylperoxy-isopropyl)benzol, 1-Phenyl-1-t-butylperoxy-phthalid.

In die Gruppe der Ketalperoxide als ebenfalls bevorzugte Initiatoren fallen beispielsweise: 1,1-Bis(t-butylperoxy)-3,3,5-trimethyl-cyclohexan, 1,1-Bis(t-butylperoxy)-cyclohexan, 2,2′-Bis(t-butylperoxy)-butan, Ethyl-3,3-bis(t-butylperoxy)-butyrat, n-Butyl-4,4-bis(t-butylperoxy)-valerat, und andere.

Aus der Gruppe der Perester seien t-Butylperoxybenzoat und das t-Butylperoxy-o-methylbenzoat erwähnt.

Als gemischte Dialkylperoxid-Perketale seien 3,3,6,6,9,9-Hexamethyl-1,2,4,5-tetraoxanonan und 3,6,6,9,9-Pentamethyl-3-carbethoxy-1,2,4,5-tetraoxanonan genannt.

Andere Peroxide können ebenfalls als Radikalbildner verwendet werden. Es können auch Mischungen verschiedener Peroxide eingesetzt werden.

Die Peroxide werden in Mengen von 0,1 % bis 15 %, bezogen auf Polymeres, insbesondere 1 % bis 10 %, vorzugsweise 1 % bis 8 %, eingesetzt.

In den erfindungsgemäss verwendeten Hydrochinonderivaten der allgemeinen Formeln I, II und III bedeuten R und R¹ vorzugsweise t-Butyl, t-Amyl, t-Hexyl (= 1,1-Diethyl-ethyl oder 1,1-Dimethyl-butyl), t-Octyl (= 1,1,3,3-Tetramethyl-butyl), 1-Methylcyclohexyl-(1); α-Cumyl oder p-Isopropylcumyl und X bedeutet vorzugsweise Butandiyl-(1,4), Octandiyl-(1,8), Octatrien-(2,4,6)-diyl-(1,8), PhCH〈, Ph(CH₃)C〈, (Ph)₂C〈, -CH₂-CH=CH-CH₂-, -CH₂-, CH₃CH〈, (CH₃)₂C〈, meta oder para -C(CH₃)₂-C₆H₄-C(CH₃)₂-.

Beispiele von Hydrochinonderivaten der Formeln I, II und III sind Mono-t-butyl-hydrochinon, 2,5-Di-t-butyl-hydrochinon, Mono-t-amyl-hydrochinon, 2,5-Di-t-amyl-hydrochinon, Mono(oder 2,5-Di)-t-hexyl-hydrochinon, Mono(oder 2,5-Di)-t-octyl-hydrochinon, Mono(oder 2,5-Di)-1-methylcyclohexyl-(1)-hydrochinon, Mono(oder 2,5-Di)-cumyl-hydrochinon; 1,4-Bis(2-t-butyl-hydrochinonyl-(5))-buten-(2), alpha, alpha′-Bis(2-t-butyl-hydrochinonyl-(5))-diisopropylbenzol; 2-t-Butyl-5-t-amyl-hydrochinon, 2-t-Butyl-5-t-octyl-hydrochinon; 2-t-Butyl-naphthohydrochinon, 2-t-Amyl-naphthohydrochinon.

Besonders bevorzugt sind Mono-t-butyl-hydrochinon (I, R = t-Butyl, R¹ = H) oder 2,5-Di-t-amyl-hydrochinon (I, R = R¹ = t-Amyl).

Die Scorchzeitverlängerer werden in Mengen von 0,1 % bis 10 %, bezogen auf Polymeres, insbesondere 0,2 % bis 2 %, vorzugsweise 0,1 % bis 0,5 % eingesetzt.

Die erfindungsgemäss verwendeten Vernetzungsverstärker sind Verbindungen mit mindestens zwei polymerisierbaren C-C-Doppelbindungen. Es sind Di- und polyfunktionelle Monomere. Hierzu gehören alle Di- und Poly-Acryl-, Methacryl-, Vinyl-, Allyl- und Methallyl-Monomere, wie Triallylcyanurat, Triallylisocyanurat, Triallylphosphat, Triallyltrimellitat, Triallylcitrat, Diallylterephthalat, Diallyladipat, Diallylmaleinat, Diallylfumarat, Trimethylpropantrimethacrylat, Ethylenglycoldimethacrylat, Trimethylolpropantriacrylat, sowie m-Phenylenbismaleinimid.

Es können auch Mischungen verschiedener Vernetzungsverstärker eingesetzt werden.

Die Vernetzungsverstärker werden in Mengen von 0,1 % bis 15 %, bezogen auf Polymeres, insbesondere 0,1 % bis 5 %, vorzugsweise 0,2 % bis 2 % eingesetzt.

Das Mischungsverhältnis Peroxid zu Scorchzeitverlängerer zu Vernetzungsverstärker kann in weiten Bereichen schwanken, nämlich Peroxid 5 bis 90 %, vorzugsweise 20 bis 90 %, insbesondere 20 bis 50 %, Scorchzeitverlängerer 0,1 bis 50 %, vorzugsweise 1 bis 30 %, insbesondere 2 bis 20 % und Vernetzungsverstärker 0,1 bis 90 %, vorzugsweise 1 bis 30 %, insbesondere 2 bis 20 % bezogen auf das Gesamtgewicht (a) + (b) + (c).

Beispiele optimaler Mischungsverhältnisse sind
75 % 1,1-Bis(t-butylperoxy-3,3,5-trimethylcyclohexanon
8 % 2,5-Di-t-amyl-hydrochinon
17 % Triallyltrimellitat
73 % 2,5-Dimethyl-2,5-bis(t-butylperoxy)-hexan
7 % 2,5-Di-t-amyl-hydrochinon
20 % Triallyltrimellitat
73 % Dicumylperoxid
6,5 % 2,5-Di-t-butyl-hydrochinon
19,5 % Triallylcyanurat
Die erfindungsgemässe Mischung kann flüssig sein und als vierte Komponente inerte Lösungsmittel enthalten. Sie kann pulverförmig sein und als vierte Komponente inerte, pulverförmige Füllstoffe (z.B. Kieselsäure, Calciumcarbonat, Kaolin, Talkum) enthalten, oder pastenförmig sein und als vierte Komponente inerte, pulverförmige Füllstoffe und gegebenenfalls als fünfte Komponente inerte Lösungsmittel enthalten. Oder sie kann granulatförmig sein und als weitere Komponenten feste und flüssige Produkte enthalten. Sie kann auch als Masterbatch vorliegen und dann zusätzlich als "Binder" ein Polymer (z.B. EPDM) enthalten.

Beispiele von Formulierungen der erfindungsgemässen Mischungen, die 40 bis 50 % Peroxid enthalten, sind die folgenden:
a) Flüssige Formulierung:
   42,8 % 1,1′-Bis(t-butylperoxy)-3,3,5-trimethylcyclohexan, 95 %ig
   4,6 % 2,5-Di-t-amyl-hydrochinon
   9,3 % Triallylmellitat
   43,3 % Dibutylphthalat
b) Pulverförmige Formulierungen:
   41,5 % Dicumylperoxid, 98 %ig
   3,7 % 2,5-Di-t-amyl-hydrochinon, 98 %ig
   11,1 % Triallyltrimellitat
   43,7 % Füllstoff-Pulver
   42,8 % alpha,alpha′-Bis(t-butylperoxy)-diisopropylbenzol, 95 %ig
   5,5 % 2,5-Di-t-amyl-hydrochinon, 98 %ig
   16,5 % Triallyltrimellitat
   35,2 % Füllstoff-Pulver
   50,2 % 2,5-Dimethyl-2,5-bis(t-butylperoxy)-hexan, 90 %ig
   4,2 % 2,5-Di-t-butyl-hydrochinon
   12,4 % Triallylcyanurat
   33,2 % Füllstoff-Pulver
c) Pastenförmige Formulierung:
   42,8 % 1,1-Bis(t-butylperoxy)-3,3,5-trimethylcyclohexan, 95 %ig
   4,6 % 2,5-Di-t-amyl-hydrochinon
   9,3 % Triallyltrimellitat
   23,3 % Kieselsäure
   20 % Pararaffinöl, Siedebereich 300 - 500°C
d) Granulatförmige Formulierung
   42,8 % 1,1-Bis(t-butylperoxy)-3,3,5-trimethylcyclohexan, 95 %ig
   4,6 % 2,5-Di-t-amyl-hydrochinon
   9,3 % Triallyltrimellitat
   33 % Kieselsäure
   10,3 % Paraffinöl, Siedebereich 300 bis 500°C
e) Masterbatch
   50,2 % 2,5-Dimethyl-2,5-bis(t-butylperoxy)-hexan, 90 %ig
   4,2 % 2,5-Di-t-butyl-hydrochinon
   16,5 % Triallyltrimellitat
   19,1 % Füllstoff
   10 % EPDM
Die Formulierungen der erfindungsgemässen Mischungen enthalten neben den Wirkstoffen 0 bis 80 %, bezogen auf das Gesamtgewicht der Mischung, inerter fester oder flüssiger Zusatzstoffe, wobei "inert" nicht im strengen Sinn als ohne Einfluss auf die Wirkstoffe bei Lagerung und Vernetzung aufzufassen ist, da z.B. saure Füllstoffe von gewissen Peroxiden (wie Dicumylperoxid) bei der Vernetzung einen gewissen Anteil zersetzen und so seiner Vernetzungswirkung entziehen. - Beispiele flüssiger inerter Zusatzstoffe sind geradkettige aliphatische, verzweigte aliphatische, alkylaromatische Öle, Öle, die ein Gemisch aus zwei, drei oder vier der eben genannten Typen darstellen, Phthalsäureester oder andere hochsiedende Ester. - Beispiele für inerte anorganische (in der Regel pulvrige) Zusatzstoffe sind Calciumcarbonat, Kaolin, Talkum, Calciumsilikat, Aluminiumsilikat, pyrogene Kieselsäure oder gefällte Kieselsäure. - Beispiele für inerte feste oder flüssige polymere Zusatzstoffe sind Ethylen-Propylen-Copolymer (EPR), Ethylen-Propylen-Dien-Copolymer (EPDM), Naturkautschuk, Budatien-Styrol-Copolymer (SBR), Ethylen-Vinylacetat-Copolymer (EVA), Polyethylen (PE), Polypropylen (PP), Polystyrol, Polyvinylchlorid (PVC), chloriertes Polyethylen, Silikonkautschuk, Silikonöl, Polyethylenöl und Polybutadienöl. - Jeder dieser Zusatzstoffe kann für sich alleine oder in beliebiger Kombination mit den anderen Zusatzstoffen angewandt werden.

Bei dem erfindungsgemässen Verfahren wird das Polymer mit der erfindungsgemäss verwendeten Kombination im gleichen Temperaturbereich vernetzt wie mit den Peroxiden allein. Der temperaturmässig einzige Unterschied liegt in der höheren Anspringtemperatur der Vernetzung durch die erfindungsgemäss verwendete Kombination, die im direkten Zusammenhang mit der Scorchzeitverlängerung steht.

Das erfindungsgemässe Verfahren kann auch unter Zusatz von Antiozonantien, üblichen Antioxydantien, Glasfasern, Pigmenten, Russ, UV-Stabilisatoren, Verschäumungsmitteln (z.B. 2,2′-Azobisisobutyramid, 2,2′-Azobis(isobuttersäureethylester), Azodicarbonamid), Flammschutzmitteln, antistatischen Mitteln, Gleitmitteln, Weichmachern oder anderen Zusätzen erfolgen.

Die zur Vernetzung erforderliche Energiezufuhr kann
a) durch direkten Kontakt des zu vernetzenden Polymeren mit einem vorgeheizten Material, z.B. Stahl, geschmolzenem Metall, geschmolzenem Salz, Wasser(dampf), Luft, Stickstoff,
b) durch elektromagnetische Strahlung, z.B. IR, UHF (= Mikrowellen), Röntgenstrahlen, Gammastrahlen, oder
c) durch Korpuskularstrahlen, z.B. Alpha-Strahlen oder Beta-Strahlen (= Elektronenstrahlen) erfolgen.

Die Erfindung wird durch die nachstehenden Beispiele erläutert.

### BEISPIELE:

Agenzien und inerte Zusätze wurden in das Polymer auf einer Walze eingearbeitet.

### Folgende Abkürzungen werden benutzt:

### Formulierungen der erfindungsgemässen Mischungen:

- A-1:: 42,8 Gew.-% 1,1-Bis(t-butylperoxy)-3,3,5-trimethylcyclohexan, 95 %ig
4,6 Gew.-% 2,5-Di-t-amyl-hydrochinon, 98 %ig
9,3 Gew.-% Triallyltrimellitat
43,3 Gew.-% Kieselsäure
- B-1:: 41,5 Gew.-% Dicumylperoxid, 98 %ig
3,7 Gew.-% 2,5-Di-t-amyl-hydrochinon, 98 %ig
11,1 Gew.-% Triallyltrimellitat
43,7 Gew.-% Füllstoff (Kieselsäure / CaCO₃)
- C-1:: 50,2 Gew.-% 2,5-Dimethyl-2,5-bis(t-butylperoxy)-hexan, 90 %ig
4,2 Gew.-% 2,5-Di-t-amyl-hydrochinon, 98 %ig
12,4 Gew.-% Triallyltrimellitat
33,2 Gew.-% Füllstoff (Kieselsäure / CaCO₃)
- D-1:: 42,8 Gew.-% alpha,alpha′-Bis(t-butylperoxy)-diisopropylbenzol, 95 %ig
5,5 Gew.-% 2,5-Di-t-amyl-hydrochinon, 98 %ig
16,5 Gew.-% Triallyltrimellitat
35,2 Gew.-% Füllstoff (Kieselsäure / CaCO₃).

### Peroxidstandardformulierungen:

- A-0:: 1,1-Bis(t-butylperoxy)-3,3,5-trimethylcyclohexan, 40 %ig auf inertem Füllstoff
- B-0:: Dicumylperoxid, 40 %ig auf inertem Füllstoff
- C-0:: 2,5-Dimethyl-2,5-bis(t-butylperoxy)-hexan, 45 %ig auf inertem Füllstoff
- D-0:: alpha, alpha′-Bis(t-butylperoxy)-diisopropylbenzol, 40 %ig auf inertem Füllstoff.

Die Vernetzung der Polymere wurde im Monsanto-Rheometer in einer beheizten Form mit einer um 1° oszillierenden Scheibe vorgenommen. Der Fortgang der Vernetzung wurde als Kurve registriert und ist am Anstieg des Drehmoments zu erkennen. Aus der Kurve lassen sich die Scorchzeit, die Vernetzungszeit und die Vernetzung (= Resultante aus Vernetzungsgrad und Vernetzungsdichte) ablesen:
- M_{L}: = tiefster Punkt der Vernetzungskurve
- M_{H}: = höchster Punkt der Vernetzungskurve
- t₅: = Scorchzeit (= Zeit in Minuten bis zum Erreichen von 5 % der maximalen Vernetzung des nicht-inhibierten Peroxidsystems)
- tₛ: = Scorchzeit der inhibierten Systeme, die beim gleichen Anstieg des Drehmoments (Viskosität) des entsprechenden nicht-inhibierten Peroxids t₅ gemessen wurde
- t₉₀: = Vernetzungszeit (= Zeit in Minuten bis zum Erreichen von 90 % der maximalen Vernetzung)
- M_{H}-M_{L}: = relativer Vernetzungsgrad

Ein weiteres Mass der Vernetzung von Kautschuk stellt die Shorehärte dar.

### Vergleichsbeispiel A:

Es wird gezeigt, dass Antioxydantien (ohne gleichzeitige Anwesenheit von Vernetzungsverstärkern) die Vernetzung (M_{H}-M_{L}) und die Shorehärte verschlechtern, wobei die klassischen Antioxydantien BHT und Irganox 1076 eine stärkere Verschlechterung bewirken als die Hydrochinon-Derivate.

### Ethylen-Propylen-Dien-Copolymer (= EPDM ) folgender Mischungszusammensetzung

32,5 Gew.-% EPDM mit einer Mooneyviskosität ML (1+4) bei 125°C
1,5 Gew.-% ZnO
29 Gew.-% FEF Russ
13 Gew.-% CaCO₃
24 Gew.-% paraffinisches Öl
wurde mittels 3 % Dicumylperoxid, 40 %ig bei 180°C in Gegenwart von 0,3 % der Antioxydantien 2,6-Di-t-butyl-4-methyl-phenol (= BHT), 3-(3,5-Di-t-butyl-4-hydroxyphenyl)-propionsäure-stearylester (= Irganox 1076), 2-t-Butyl-hydrochinon, 2,5-Di-t-butyl-hydrochinon, 2-t-Amyl-hydrochinon und 2,5-Di-t-amyl-hydrochinon im Monsanto-Rheometer vernetzt (die %-Angaben 3 % und 0,3 % beziehen sich auf die fertige EPDM-Mischung):

| Antioxydans | tₛ/t₅ Min. | t₉₀ Min. | M_{H}-M_{L} | Shorehärte A |
|---|---|---|---|---|
| keines | 0,9 | 5,1 | 52 | 50 |
| 0,3 % BHT | 1,3 | 5,6 | 35 | 42 |
| 0,3 % Irganox 1076 | 1,1 | 5,5 | 36 | 42 |
| 0,3 % 2-t-Butyl-hydrochinon | 1,3 | 5,1 | 50 | 49 |
| 0,3 % 2,5-Di-t-butyl-hydrochonin | 1,2 | 5,2 | 38 | 43 |
| 0,3 % 2,5-Di-t-amyl-hydrochinon | 1,3 | 5,1 | 51 | 49 |
| 0,3 % 2-t-amyl-hydrochinon | 1,1 | 5,1 | 45 | 48 |

### Beispiel 1:

Dieses Beispiel zeigt, dass sich bei Kombination der Antioxydantien mit Vernetzungsverstärkern die negativen Effekte (verlängerte Vernetzungszeit (= t₉₀), verschlechterte Vernetzung (= M_{H}-M_{L})) normaler Antioxydantien (2,6-Di-t-butyl-4-methyl-phenol (= BHT), 3-(3,5-Di-t-butyl-4-hydroxy-phenyl)-propionsäure-stearylester (= Irganox 1076)) nicht, wohl aber diejenigen der erfindungsgemässen Antioxydantien (= Scorchzeitverlängerer) beseitigen lassen (als zusätzlicher Vergleich dienen die Werte des Vergleichsbeispiels A).

Die EPDM-Mischung aus Vergleichsbeispiel A wurde mittels 3 % Dicumylperoxid 40 % bei 180°C in Gegenwart von 0,3 % Triallyltrimellitat als Vernetzungsverstärker und der in der Tabelle angegebenen Antioxydantien im Monsanto-Rheometer vernetzt (Die %-Angaben 3 und 0,3 %, sowie nachstehend 0,3 % Antioxydans beziehen sich auf fertige EPDM-Mischung):

| Antioxydans | tₛ/t₅ Min. | t₉₀ Min. | M_{H}-M_{L} | Shore härte A |
|---|---|---|---|---|
| keines | 0,9 | 5,1 | 52 | 50 |
| 0,3 % BHT | 1,3 | 5,8 | 42 | 45 |
| 0,3 % Irganox 1076 | 1,1 | 5,9 | 42 | 45 |
| 0,3 % 2-t-Butyl-hydrochinon | 1,3 | 5,1 | 54 | 51 |

### Beispiel 2:

Dieses Beispiel zeigt die scorchinhibierende Wirkung von 3 % der erfindungsgemässen Dreierkombinationen als Formulierungen A-1, B-1, C-1 und D-1, die Peroxid, Scorchverzögerer und Vernetzungsverstärker enthalten, im Vergleich zu den entsprechenden Peroxidstandardformulierungen A-0, B-0, C-0, D-0, die keinen Scorchverzögerer und keinen Vernetzungsverstärker enthalten, in der Vernetzung nachstehender EPDM-Mischung (= Ethylen-Propylen-Dien-Copolymer):

| | |
|---|---|
| 32,5 Gew.-% EPDM mit Mooneyviskosität ML (1+4) bei 125°C | (100 Teile) |
| 1,5 Gew.-% ZnO | ( 5 Teile) |
| 29 Gew.-% FEF Russ | ( 90 Teile) |
| 13 Gew.-% CaCO₃ | ( 40 Teile) |
| 24 Gew.-% paraffinisches Öl | ( 75 Teile) |
| | 310 Teile) |

| Vernetzungsformulierung | | tₛ/t₅ Min. | t₉₀ Min. | M_{H}-M_{L} | Vernetzungs-Temperatur | Shorehärte A |
|---|---|---|---|---|---|---|
| A-0 | 3,0 % | 0,34 | 1,13 | 5 | 180°C | 63 |
| A-1 | 3,0 % | 0,68 | 1,17 | 5,9 | 180°C | 63 |
| B-0 | 3,0 % | 0,65 | 4,0 | 8,75 | 180°C | 67 |
| B-1 | 3,0 % | 1,15 | 4,3 | 9,3 | 180°C | 67 |
| C-0 | 2,5 % | 0,70 | 6,5 | 11,4 | 180°C | 73 |
| C-1 | 2,5 % | 1,55 | 5,5 | 11,4 | 180°C | 73 |
| D-0 | 2,0 % | 0,70 | 6,5 | 9,05 | 180°C | 70 |
| D-1 | 2,0 % | 1,60 | 6,6 | 9,25 | 180°C | 70 |

Die Scorchzeiten (= tₛ) der erfindungsgemässen Formulierungen (A-1, B-1, C-1, D-1) sind etwa doppelt so lang wie diejenigen t₅, welche die gleiche Menge Peroxid enthaltenden Peroxidstandardformulierungen (A-0, B-0, C-0, D-0) bei praktisch gleicher Vernetzungszeit (= t₉₀) und gleicher oder besserer Vernetzung (= M_{H}-M_{L}) geben.

### Beispiel 3:

Dieses Beispiel zeigt die scorchinhibierende Wirkung von 2 % bzw. 3 % der erfindungsgemässen Dreierkombination als Formulierung B-1, C-1 und D-1, die Peroxid, Scorchzeitverzögerer und Vernetzungsverstärker enthalten, im Vergleich zu den entsprechenden Peroxidstandardformulierungen B-0, C-0 und D-0, die keinen Scorchverzögerer und keinen Vernetzungsverstärker enthalten, in der Vernetzung von HDPE (= Polyethylen hoher Dichte) im Monsanto-Rheometer bei 150°C bzw. 180°C:

| Vernetzungsformulierung | | tₛ/t₅ Min. | t₉₀ Min. | M_{H}-M_{L} | Vernetszungs-Temperatur |
|---|---|---|---|---|---|
| B-0 | 3 % | 1,0 | 4,0 | 94 | 180°C |
| B-1 | 3,% | 1,4 | 4,0 | 112 | 180°C |
| B-0 | 3 % | 4,0 | 56,0 | - | 150°C |
| B-1 | 3 % | 6,0 | 55,0 | - | 150°C |
| C-0 | 2 % | 1,35 | 6,0 | 106,5 | 180°C |
| C-1 | 2 % | 1,9 | 6,0 | 110,0 | 180°C |
| C-0 | 2 % | 4,5 | 45,0 | 40,5 | 150°C |
| C-1 | 2 % | 9,0 | 48,0 | 42,5 | 150°C |
| D-0 | 2 % | 1,3 | 6,0 | 106,0 | 180°C |
| D-1 | 2 % | 1,8 | 6,3 | 103,0 | 180°C |
| D-0 | 2 % | 5,5 | 70,0 | 50,0 | 150°C |
| D-1 | 2 % | 10,5 | 76,0 | 46,0 | 150°C |

Die Scorchzeiten (= tₛ) der erfindungsgemässen Formulierungen (B-1, C-1, D-1) sind um das etwa 1,5- bis 2-fache länger als die t₅, der die gleiche Menge Peroxid enthalhaltenden Peroxidstandardformulierungen (A-0, B-0, C-0, D-0) bei praktisch gleicher Vernetzungszeit(=t₉₀) und praktisch gleicher Vernetzung(=M_{H}-M_{L}).

### Beispiel 4:

Dieses Beispiel zeigt die scorchinhibierende Wirkung von 2 % bzw. 3,5 % bzw. 4 % bzw. 4,5 % der erfindungsgemässen Dreierkombination als Formulierung A-1, B-1, C-1, D-1, die Peroxid, Scorchzeitverzögerer und Vernetzungsverstärker enthalten, im Vergleich zu den entsprechenden Peroxidstandardformulierungen A-0, B-0, C-0 und D-0, die keinen Scorchverzögerer und keinen Vernetzungsverstärker enthalten, in der Vernetzung von EVA (= Ethylen-Vinylacetat-Copolymer) im Monsanto-Rheometer bei 150°C bzw. 180°C:

| Vernetzungsformulierung | | tₛ/t₅ Min. | t₉₀ Min. | M_{H}-M_{L} | Vernetzungs-Temperatur |
|---|---|---|---|---|---|
| A-0 | 4,5 % | 1,5 | 8,6 | 28,0 | 150°C |
| A-1 | 4,5 % | 3,0 | 7,2 | 39,5 | 150°C |
| A-0 | 4,5 % | 0,65 | 1,7 | 20,5 | 180°C |
| A-1 | 4,5 % | 1,1 | 1,72 | 21,0 | 180°C |
| B-0 | 2 % | 8,0 | 70,0 | 21,0 | 150°C |
| B-1 | 2 % | 15,0 | 73,0 | 30,0 | 150°C |
| B-0 | 3,5 % | 1,25 | 5,8 | 55,0 | 180°C |
| B-1 | 3,5 % | 2,0 | 5,5 | 55,0 | 180°C |
| C-0 | 4 % | 8,0 | 129,0 | 84,0 | 150°C |
| C-1 | 4 % | 18,5 | 132,0 | 93,0 | 150°C |
| C-0 | 4 % | 1,6 | 9,6 | 86,0 | 180°C |
| C-1 | 4 % | 2,5 | 9,3 | 93,0 | 180°C |
| D-0 | 2 % | 12,0 | 132,0 | 41,0 | 150°C |
| D-1 | 2 % | 33,0 | 132,0 | 41,0 | 150°C |
| D-0 | 3,5 % | 1,7 | 9,2 | 80,0 | 180°C |
| D-1 | 3,5 % | 2,8 | 8,6 | 79,0 | 180°C |

Die Scorchzeiten (= tₛ) der erfindungsgemässen Formulierungen (A-1, B-1, C-1, D-1) sind um das etwa 1,5- bis 2-fache länger als die t₅ der die gleiche Menge Peroxid enthaltenden Peroxidstandardformulierungen (A-0, B-0, C-0, D-0) bei praktisch gleicher Vernetzungszeit (= t₉₀) und praktisch gleichem Vernetzungsgrad (= M_{H}-M_{L}).

### Beispiel 5:

Aus diesem Beispiel ist die gute Lagerstabilität der erfindungsgemässen Dreierkombinationen A-1, B-1, C-1 und D-1 zu ersehen, die Peroxid, Scorchzeitverzögerer und Vernetzungsverstärker enthalten, im Vergleich zu den entsprechenden Peroxidstandardformulierungen A-0, B-0, C-0 und D-0, die zwar Peroxid aber keinen Scorchverzögerer und keinen Vernetzungsverstärker enthalten, sowie den Formulierungen A-2, B-2, C-2 und D-2, die Peroxid und Vernetzungsverstärker aber keinen Inhibitor, und ausserdem den Formulierungen A-3, B-3, C-3 und D-3, welche Peroxid und Antioxydans aber keinen Vernetzungsverstärker enthalten. Die hier genannten Formulierungen werden im 60°C warmen Wasserbad in einem geschlossenen Gefäss 10 Tage gelagert. Ihr Peroxidgehalt wird vorher und nachher nach den üblichen bewährten Analysenmethoden bestimmt. Hier wird in erster Linie gezeigt, dass die Stabilität des Peroxids durch Antioxydans und Vernetzungsverstärker nicht leidet.

### Lagerstabilität (10 Tage bei 60°C):

| Peroxidformulierungen | Anfangsgehalt | Gehalt nach 10 Tage | **Peroxidabnahme** | |
|---|---|---|---|---|
| | | | a) Differenz | b) in % des Anfangsgehalts |
| A-0 | 38,7 % | 30,8 % | 9,6 % | 23,8 % |
| A-1 | 44,3 % | 38,8 % | 5,5 % | 12,4 % |
| A-2 | 42,1 % | 25,6 % | 16,5 % | 39,2 % |
| A-3 | 41,8 % | 36,0 % | 5,8 % | 13,9 % |
| B-0 | 39,8 % | 39,8 % | - | keine Abnahme |
| B-1 | 38,4 % | 39,1 % | - | keine Abnahme |
| B-2 | 40,1 % | 35,8 % | 4,3 % | 10,7 % |
| B-3 | 40,1 % | 38,0 % | 1,9 % | 4,7 % |
| C-0 | 46,0 % | 45,0 % | 1 % | 2,17 % |
| C-1 | 45,2 % | 45,3 % | - | keine Abnahme |
| C-2 | 45,2 % | 40,0 % | 5,2 % | 11,50 % |
| C-3 | 46,0 % | 44,0 % | 2,0 % | 4,3 % |
| D-0 | 40,7 % | 41,0 % | - | keine Abnahme |
| D-1 | 39,1 % | 39,2 % | - | keine Abnahme |
| D-2 | 40,2 % | 35,0 % | 5,2 % | 12,4 % |
| D-3 | 40,3 % | 39,5 % | 0,8 % | 2,0 % |

Die ausgezeichnete Stabilität der gemischten Vernetzungsmittel war überraschend, da normalerweise Mischungen aus polyfunktionellen Monomeren mit Peroxiden in dieser Konzentration sehr unstabil sind. Auch mit Hydrochinonderivaten versetzte Peroxide sind unstabiler wie aus diesen Stabilitätstests hervorgeht. Die aufgeführten Produkte (A-D)-2 und (A-D)-3 haben folgende Zusammensetzung:
- A-2: = 43 Gew.-% 1,1-Bis(t-butylperoxy)-3,3,5-trimethylcyclohexan, 95 %ig
10 Gew.-% Triallyltrimellitat
47 Gew.-% Kieselsäure
- A-3: = 43 Gew.-% 1,1-Bis(t-butylperoxy)-3,3,5-trimethylcyclohexan, 95 %ig
5 Gew.-% 2,5-Di-t-amyl-hydrochinon, 98 %ig
52 Gew.-% Kieselsäure
- B-2: = 41,5 Gew.-% Dicumylperoxid, 98 %ig
11,1 Gew.-% Triallyltrimellitat
43,4 Gew.-% Füllstoff (Kieselsäure / CaCo₃)
- B-3: = 41,5 Gew.-% Dicumylperoxid, 98 %ig
4 Gew.-% 2,5-Di-t-amyl-hydrochinon, 98 %ig
54,5 Gew.-% Füllstoff (Kieselsäure / CaCo₃)
- C-2: = 50,2 Gew.-% 2,5-Dimethyl-2,5-bis(t-butylperoxy)-hexan, 90 %ig
12,4 Gew.-% Triallyltrimellitat, 98 %ig
37,4 Gew.-% Kieselsäure (Füllstoff)
- C-3: = 50,2 Gew.-% 2,5-Dimethyl-2,5-bis(t-butylperoxy)-hexan, 90 %ig
4,2 Gew.-% 2,5-Di-t-amyl-hydrochinon, 98 %ig
55,6 Gew.-% Füllstoff (Kieselsäure)
- D-2: = 42,8 Gew.-% α, α′-Bis(t-butylperoxy)-diisopropylbenzol, 95 %ig
16,5 Gew.-% Triallyltrimellitat, 98 %ig
30,7 Gew.-% Füllstoff (Kieselsäure / CaCo₃)
- D-3: = 42,8 Gew.-% α, α′-Bis(t-butylperoxy)-diisopropylbenzol, 95 %ig
5,5 Gew.-% 2,5-Di-t-amyl-hydrochinon, 98 %ig
51,7 Gew.-% Füllstoff (Kieselsäure / CaCo₃)

### Beispiel 6:

Beispiel 6 zeigt, dass in den erfindungsgemässen Dreierkombinationen A-1, B-1, C-1 und D-1 nicht nur das Peroxid, sondern auch der Vernetzungsverstärker und das Antioxydans nach Lagerung unverändert bleiben, da die erfindungsgemässe Wirksamkeit der Dreierkombinationen hinsichtlich Scorchzeit, Vernetzung und Vernetzungsgeschwindigkeit die gleiche war wie am Beginn der Lagerzeit.

Die erfindungsgemässen Mischungen A-1, B-1, C-1 und D-1 wurden 6 Monate bei Raumtemperatur gelagert. Sie wurden in der Vernetzung von EPDM, HDPE und EVA nach 2 Monaten und nach 6 Monaten, wie in den Beispielen 2, 3 und 4 beschrieben, geprüft. Die erhaltenen Werte waren die gleichen wie diejenigen der frisch hergestellten Mischungen.

### Beispiel 7:

Dieses Beispiel zeigt, dass die in den Vernetzungsbeispielen 2, 3 und 4 erhaltenen Ergebnisse auch dann erhalten werden, wenn die Komponenten Peroxid, Antioxydans, Vernetzungsverstärker und Füllstoff nicht in Form der erfindungsgemässen Mischungen A-1, B-1, C-1 und D-1 dem zu vernetzenden Polymeren vor der Vernetzung zugemischt werden, sondern einzeln und nacheinander zugegeben werden.

Nach diesem "Einzelverfahren" wurde nur ein Teil der Beispiele 2, 3 und 4 wiederholt, nämlich

### Beispiel 2:

A-1 (Mischung) im Vergleich zu A-1 (Einzel)

### Beispiel 3:

B-1 (Mischung) im Vergleich zu B-1 (Einzel)

### Beispiel 4:

C-1 (Mischung) im Vergleich zu C-1 (Einzel)
D-1 (Mischung) im Vergleich zu D-1 (Einzel)
Die mit (A-D)-1 (Mischung) erzielten Ergebnisse waren identisch mit denjenigen, die mit (A-D)-1 (Einzel) erhalten wurden.

## Patentansprüche

1. Mischung enthaltend
(a) mindestens ein organisches, zur Vernetzung von Polymeren geeignetes Peroxid,
(b) mindestens ein Hydrochinonderivat der allgemeinen Formeln I und/oder II und/oder III 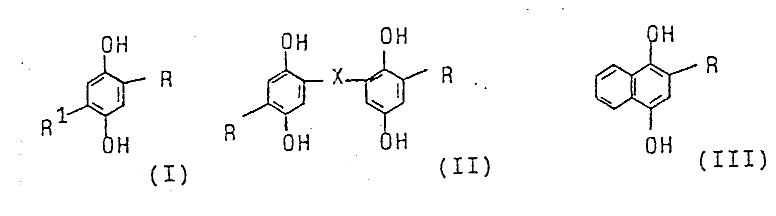 in denen R und R¹, die gleich oder verschieden sein können, H, t-Alkyl, t-Cycloalkyl oder Aryl-t-alkyl und X = C₁₋₁₈-Alkylen, das durch C₁₋₁₀-Alkyl und/oder C₁₋₁₀-Alkoxy und/oder Phenyl substituiert sein kann, C₂₋₁₈-Alkenylen oder C₂₋₁₈-Alkpolyenylen, die durch C₁₋₁₀-Alkyl substituiert sein können, oder -(CR²R³)ₙ-Ar-(CR²R³)ₘ-, worin R² und R³ gleich oder verschieden Wasserstoff oder C₁₋₁₀-Alkyl, Ar Phenyl oder Naphthyl, n und m 0 bis 18 und n + m ≦ 18 sind, bedeuten, wobei die Hydrochinone der Formel III am nicht durch die Hydroxygruppen und R substituierten Benzolring des Naphthalin-Gerüstes durch C₁₋₁₀-Alkyl substituiert sein können und
(c) mindestens einen Vernetzungsverstärker, der eine Verbindung mit mindestens zwei polymerisierbaren C-C-Doppelbindungen ist.

2. Mischung nach Anspruch 1, dadurch gekennzeichnet, dass sie als organisches Peroxid Dialkylperoxid, Diaralkylperoxid oder Ketalperoxid enthält.

3. Mischung nach Anspruch 1 oder 2, dadurch gekennzeichnet, dass sie als Hydrochinonderivat Mono-t-butyl-hydrochinon, 2,5-Di-t-butyl-hydrochinon oder 2,5-Di-t-amyl-hydrochinon enthält.

4. Mischung nach mindestens einem der Ansprüche 1 bis 3, dadurch gekennzeichnet, dass sie als Vernetzungsverstärker Triallylcyanurat, Triallylisocyanurat oder Triallyltrimellitat enthält.

5. Verfahren zum Vernetzen von Polymeren unter Verlängerung der Scorchzeit, dadurch gekennzeichnet, dass man dem zu vernetzenden Polymeren
(a) mindestens ein organisches, zur Vernetzung von Polymeren geeignetes Peroxid,
(b) mindestens ein Hydrochinonderivat der allgemeinen Formeln I und/oder II und/oder III 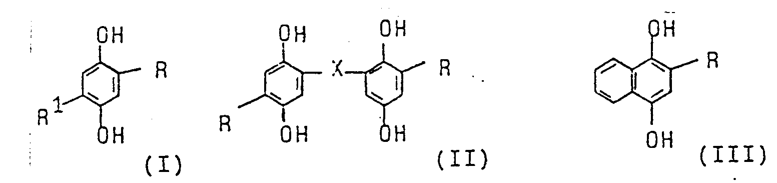 in denen R und R¹, die gleich oder verschieden sein können, H, t-Alkyl, t-Cycloalkyl oder Aryl-t-alkyl und X = C₁₋₁₈-Alkylen, das durch C₁₋₁₀-Alkyl und/oder C₁₋₁₀-Alkoxy und/oder Phenyl substituiert sein kann, C₂₋₁₈-Alkenylen oder C₂₋₁₈-Alkpolyenylen, die durch C₁₋₁₀-Alkyl substituiert sein können, oder -(CR²R³)ₙ-Ar-(CR²R³)ₘ-, worin R² und R³ gleich oder verschieden Wasserstoff oder C₁₋₁₀-Alkyl, Ar Phenyl oder Naphthyl, n und m 0 bis 18 und n + m ≦ 18 sind, bedeuten, wobei die Hydrochinone der Formel III am nicht durch die Hydroxygruppen und R substituierten Benzolring des Naphthalin-Gerüstes durch C₁₋₁₀-Alkyl substituiert sein können und
(c) mindestens einen Vernetzungsverstärker, der eine Verbindung mit mindestens zwei polymerisierbaren C-C-Doppelbindungen ist,
getrennt, gleichzeitig oder nacheinander, oder als Mischung miteinander hinzufügt.

6. Verfahren nach Anspruch 5, dadurch gekennzeichnet, dass man als organisches Peroxid Dialkylperoxid, Diaralkylperoxid oder Ketalperoxid verwendet.

7. Verfahren nach Anspruch 5 oder 6, dadurch gekennzeichet, dass man als Hydrochinonderivat Mono-t-butyl-hydrochinon, 2,5-Di-t-butyl-hydrochinon oder 2,5-Di-t-amyl-hydrochinon verwendet.

8. Verfahren nach mindestens einem der Ansprüche 5 bis 7, dadurch gekennzeichnet, dass man als Vernetzungsverstärker Triallylcyanurat, Triallylisocyanurat oder Triallyltrimellitat verwendet.

## Claims

1. Mixture containing
(a) at least one organic peroxide suitable for the cross-linking of polymers,
(b) at least one hydroquinone derivative of the general formulae I and/or II and/or III 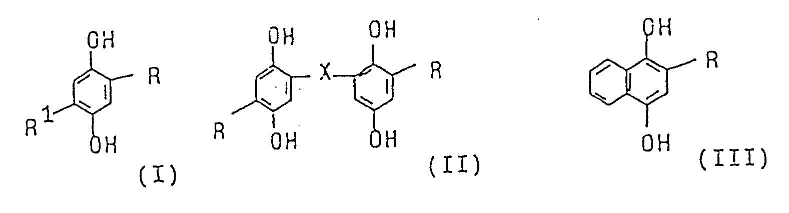 in which R and R¹, which can be the same or different, represent H, t-alkyl, t-cycloalkyl or aryl-t-alkyl and X = C₁₋₁₈ alkylene which can be substituted by C₁₋₁₀ alkyl and/or C₁₋₁₀ alkoxy and/or phenyl, C₂₋₁₈ alkenylene or C₂₋₁₈ alkpolyenylene which can be substituted by C₁₋₁₀ alkyl, or -(CR²R³)ₙ-Ar-(CR²R³)ₘ-, in which R² and R³ are the same or different and are hydrogen or C₁₋₁₀ alkyl, Ar phenyl or naphthyl, n and m are 0 to 18 and n + m ≦ 18, wherein the hydroquinones of formula III can be substituted by C₁₋ ₁₀ alkyl at the benzene ring of the naphthalene structure not substituted by the hydroxy groups and R and
(c) at least one cross-linking intensifier which is a compound with at least two polymerisable C-C double bonds.

2. Mixture according to claim 1, characterized in that it contains, as organic peroxide, dialkyl peroxide, diaralkyl peroxide or ketal peroxide.

3. Mixture according to claim 1 or 2, characterized in that it contains, as hydroquinone derivative, mono-t-butyl-hydroquinone, 2,5-di-t-butyl-hydroquinone or 2,5-di-t-amyl-hydroquinone.

4. Mixture according to at least one of claims 1 to 3, characterized in that it contains, as cross-linking intensifier, triallyl cyanurate, triallyl isocyanurate or triallyl trimellitate.

5. Process for the cross-linking of polymers with an extension of the scorch time, characterized in that, to the polymer to be cross-linked are added, separately, simultaneously or consecutively, or as a mixture with one another,
(a) at least one organic peroxide suitable for the cross-linking of polymers,
(b) at least one hydroquinone derivative of the general formulae I and/or II and/or III 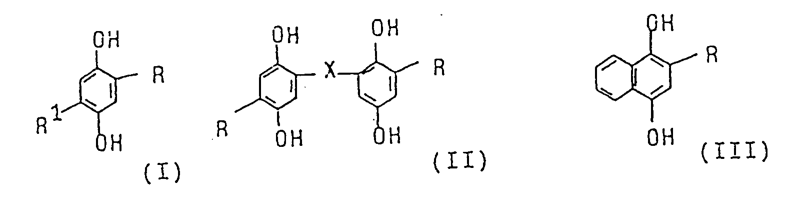 in which R and R¹, which can be the same or different, represent H, t-alkyl, t-cycloalkyl or aryl-t-alkyl and X = C₁₋₁₈ alkylene which can be substituted by C₁₋₁₀ alkyl and/or C₁₋₁₀ alkoxy and/or phenyl, C₂₋₁₈ alkenylene or C₂₋₁₈ alkpolyenylene which can be substituted by C₁₋₁₀ alkyl, or -(CR²R³)ₙ-Ar-(CR²R³)ₘ-, in which R² and R³ are the same or different and are hydrogen or C₁₋₁₀ alkyl, Ar phenyl or naphthyl, n and m are 0 to 18 and n + m ≦ 18, wherein the hydroquinones of formula III can be substituted by C₁₋₁₀ alkyl at the benzene ring of the naphthalene structure not substituted by the hydroxy groups and R and
(c) at least one cross-linking intensifier which is a compound with at least two polymerisable C-C double bonds.

6. Process according to claim 5, characterized in that dialkyl peroxide, diaralkyl peroxide or ketal peroxide is used as organic peroxide.

7. Process according to claim 5 or 6, characterized in that mono-t-butyl-hydroquinone, 2,5-di-t-butyl-hydroquinone or 2,5-di-t-amyl-hydroquinone are used as hydroquinone derivative.

8. Process according to at least one of claims 5 to 7, characterized in that triallyl cyanurate, triallyl isocyanurate or triallyl trimellitate are used as cross-linking intensifier.

## Revendications

1. Mélange contenant
(a) au moins un peroxyde organique convenant pour la réticulation de polymères
(b) au moins un dérivé d'hydroquinone de formules générales I et/ou II et/ou III 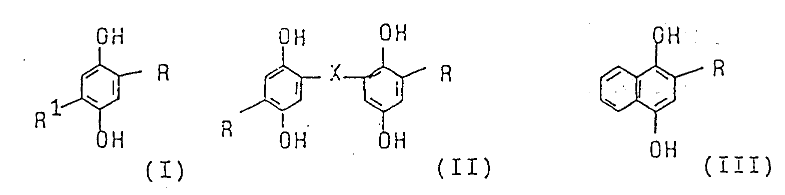 dans lesquelles R et R¹, qui peuvent être identiques ou différents, représentent H, un groupe tertio-alkyle, cyclo-alkyle tertiaire ou aryl-tertio-alkyle et X est un groupe alkylène en C₁ à C₁₈ qui peut être substitué par un radical alkyle en C₁ à C₁₀ et/ou alkoxy en C₁ à C₁₀ et/ou phényle, un groupe alcénylène en C₂ à C₁₈ ou un groupe alkpolyénylène en C₂ à C₁₈ qui peuvent être substitués par un radial alkyle en C₁ à C₁₀, ou bien un groupe -(CR²R³)ₙ-Ar-(CR²R³)ₘ-, dans lequel R² et R³ identiques ou différents représentent de l'hydrogène ou un groupe alkyle en C₁ à C₁₀, Ar est un groupe phényle ou naphtyle, n et m ont une valeur de 0 à 18 et la somme n + m est inférieure ou égale à 18, les hydroquinones de formule III pouvant être substituées par un radical alkyle en C₁ à C₁₀ sur le noyau benzénique du squelette de naphtalène non substitué par des groupes hydroxy et R, et
(c) au moins un agent renforçant la réticulation, qui est un composé présentant au moins deux doubles liaisons carbone-à-carbone polymérisables.

2. Mélange suivant la revendication 1, caractérisé en ce qu'il contient comme peroxyde organique un peroxyde de dialkyle, un peroxyde de diaralkyle ou un peroxyde de cétal.

3. Mélange suivant la revendication 1 ou 2, caractérisé en ce qu'il contient comme dérivé d'hydroquinone de la mono-tertio-butyl-hydroquinone, de la 2,5-di-tertio-butyl-hydroquinone ou de la 2,5-di-tertio-amyl-hydroquinone.

4. Mélange suivant l'une au moins des revendications 1 à 3, caractérisé en ce qu'il contient comme agent renforçant la réticulation, du cyanurate de triallyle, de l'isocyanurate de triallyle ou du trimellitate de triallyle.

5. Procédé de réticulation de polymères avec prolongation du temps d'amorçage de réticulation, caractérisé en ce qu'on ajoute au polymère à réticuler
(a) au moins un peroxyde organique convenant pour la réticulation de polymères,
(b) au moins un dérivé d'hydroquinone de formules générales I et/ou II et/ou III 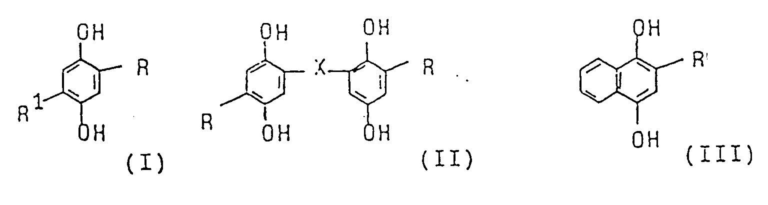 dans lesquelles R et R¹, qui peuvent être identiques ou différents, représentent H, un groupe tertio-alkyle, cyclo-alkyle tertiaire ou aryl-tertio-alkyle et X est un groupe alkylène en C₁ à C₁₈ qui peut être substitué par un radical alkyle en C₁ à C₁₀ et/ou alkoxy en C₁ à C₁₀ et/ou phényle, un groupe alcénylène en C₂ à C₁₈ ou un groupe alkpolyénylène en C₂ à C₁₈ qui peuvent être substitués par un radial alkyle en C₁ à C₁₀, ou bien un groupe -(CR²R³)ₙ-Ar-(CR²R³)ₘ-, dans lequel R² et R³ identiques ou différents représentent de l'hydrogène ou un groupe alkyle en C₁ à C₁₀, Ar est un groupe phényle ou naphtyle, n et m ont une valeur de 0 à 18 et la somme n + m est inférieure ou égale à 18, les hydroquinones de formule III pouvant être substituées par un radical alkyle en C₁ à C₁₀ sur le noyau benzénique du squelette de naphtalène non substitué par des groupes hydroxy et R, et
(c) au moins un agent renforçant la réticulation, qui est un composé présentant au moins deux doubles liaisons carbone-à-carbone polymérisables,
séparément, simultanément ou successivement, ou en mélange les uns avec les autres.

6. Procédé suivant la revendication 5, caractérisé en ce qu'on utilise comme peroxyde organique un peroxyde de dialkyle, un peroxyde de diaralkyle ou un peroxyde de cétal.

7. Procédé suivant la revendication 5 ou 6, caractérisé en ce qu'on utilise comme dérivé d'hydroquinone la mono-tertio-butyl-hydroquinone, la 2,5-di-tertio-butyl-hydroquinone ou la 2,5-di-tertio-amyl-hydroquinone.

8. Procédé suivant l'une au moins des revendications 5 à 7, caractérisé en ce qu'on utilise comme agent renforçant la réticulation, le cyanurate de triallyle, l'isocyanurate de triallyle ou le trimellitate de triallyle.
